# EUROPÄISCHE PATENTSCHRIFT

(11) **EP 0 977 651 B1**
(45) Veröffentlichungstag und Bekanntmachung des Hinweises auf die Patenterteilung: **22.08.2001**
(21) Anmeldenummer: 98921421.8
(22) Anmeldetag: 02.04.1998
(51) Int. Cl.: B23Q 41/02, B23Q 7/14, B23P 21/00, B62D 65/00

(54) **VERFAHREN UND VORRICHTUNG ZUM FERTIGEN VON KOMPLEXEN WERKSTÜCKEN**
PROCESS AND DEVICE FOR MANUFACTURING COMPLEX PARTS
PROCEDE ET DISPOSITIF DE FABRICATION DE PIECES COMPLEXES

(30) Priorität: 04.04.1997 DE 19713860
(43) Veröffentlichungstag der Anmeldung: 09.02.2000
(73) Patentinhaber: KUKA Schweissanlagen GmbH, 86165 Augsburg (DE)
(72) Erfinder: WIEDEMANN, Gerhard, D-86836 Graben (DE)
(74) Vertreter: Ernicke, Hans-Dieter, Dipl.-Ing.
(86) Internationale Anmeldenummer: EP9801936
(87) Internationale Veröffentlichungsnummer: WO9845085

(56) Entgegenhaltungen:
- EP-A- 0 147 530
- EP-A- 0 582 117
- DE-A- 4 305 470
- DE-A- 4 418 755
- FR-A- 2 636 876
- FR-A- 2 712 833
- GB-A- 2 145 642
- US-A- 4 280 304
- US-A- 4 587 716
- US-A- 4 611 749
- PATENT ABSTRACTS OF JAPAN vol. 18, no. 449 (M-1660), 22. August 1994 & JP 06 142797 A (AMADA METRECS CO LTD), 24. Mai 1994

## Beschreibung

Die Erfindung betrifft ein Verfahren und eine Vorrichtung zum Fertigen von Rohkarosserien von Fahrzeugen in einer Transferanlage mit den Merkmalen im Oberbegriff des Verfahrens- und Vorrichtungshauptanspruches.

Aus der DE-A-28 10 822 ist eine solche Transferanlage und Aufbaulinie für Rohkarosserien von Fahrzeugen bekannt. Sie besteht aus mehreren entlang einer Transferlinie angeordneten Arbeitsstationen, in denen die Rohkarosserie mit Bodengruppe, Seitenteilen, Dach etc. nach und nach aufgebaut wird, wobei die Bodengruppen und die sich aufbauenden Rohkarosserien taktweise mit einer anlagenübergreifenden Transporteinrichtung durch die Arbeitsstationen befördert werden. Als Transporteinrichtung kommt wegen des hohen Gewichts und der Größe der Karosserieteile ein Hubshuttle oder eine Rollenförderer für Paletten, ein sogenannter Skid, zum Einsatz, welche sich in einer geraden Bahn durch die Arbeitsstationen erstrecken und diese verbinden. Diese Transporteinrichtung zwingt alle Arbeitsstationen zum gleichen Arbeits- und Fördertakt und erfordert außerdem gleichmäßige Stationsabstände aufgrund der konstanten Hublänge. Die bekannten Fertigungsanlagen sind dadurch in ihrer Funktion und Kapazität beschränkt.

Aus der US-A-4,611,749 ist außerdem ein Zellensystem oder ein Teilefertigungsbereich bekannt, in dem Seitenwände und andere wesentlich kleinere und leichter zu handhabende Karosseriebaugruppen von Robotern in einer flexiblen Weise bearbeitet und transportiert werden. Diese vorgefertigten Karosseriebaugruppen werden anschließend der Transferanlage zugeführt.

Es ist Aufgabe der vorliegenden Erfindung, die Ausbildung und Funktion der bekannten gattungsgemäßen Transferanlagen zu verbessern.

Die Erfindung löst diese Aufgabe mit den Merkmalen im Verfahrens- und Vorrichtungshauptanspruch.
Die Erfindung sieht vor, bei der gattungsgemäßen Transferanlage das anlagenübergreifende Hubshuttle durch einzelne roboterunterstützte Transporteinheiten zwischen den Arbeitsstationen zu ersetzen. Der Karosserieteiltransport kann dadurch wesentlich flexibler erfolgen. Dies ermöglicht zum einen variable Förder- und Arbeitstakte der Arbeitsstationen und zum anderen eine wesentlich höhere Flexibilität in der Handhabung der Karosserieteile. Mit dem bekannten Hubshuttle waren nur gerade Transportbewegungen möglich, wobei auch bestimmte Hubhöhen und entsprechende Positionsvorgaben in den Arbeitsstationen eingehalten werden mußten. Diese Beschränkungen bestehen bei den erfindungsgemäßen Transporteinheiten nicht mehr. Vielmehr können die Förderhublängen und auch die Bewegungen von Station zu Station völlig unterschiedlich sein. Dabei lassen sich die Karosserieteile auch wesentlich flexibler als bisher positionieren, indem sie z.B. gekippt, gedreht oder in sonstiger Weise in ihrer Position während des Transportes und bei der Aufnahme bzw. Ablage verändert werden können. Mit der erfindungsgemäßen Transporttechnik kann auch Platz gespart werden, weil die Arbeitsstationen enger aneinander rücken können und außerdem nicht mehr in einer exakt geraden Transferlinie angeordnet sein müssen. Die Transferlinie kann vielmehr beliebige Formen haben.

In der bevorzugten Ausführungsform bestehen die Transporteinheiten aus ein oder mehr neben der Transferlinie zwischen den Arbeitsstationen angeordneten Transferrobotern mit geeigneten Transportwerkzeugen. Diese arbeiten in einer abgestimmten und vorzugsweise synchronen Transportbewegung. Sie fassen die Bodengruppen beidseits und überheben sie von einer Arbeitsstation in die benachbarte.

Bei dem derzeitigen Stand der Robotertechnik ist die erfindungsgemäße Transporttechnik nicht nur schneller und flexibler, sondern auch kostengünstiger und damit wirtschaftlicher als die vorbekannten Konstruktionen. Hinzu kommt, daß die Transferroboter während des Arbeitstaktes der Arbeitsstationen zusätzliche Aufgaben übernehmen können, indem sie z.B. Bearbeitungsvorgänge am Karosserieteil durchführen. Die Transferroboter können dadurch wesentlich besser ausgelastet werden, was die Wirtschaftlichkeit noch weiter steigert. Außerdem können die zwischen den Arbeitsstationen positionierten Transferroboter besonders gut die bearbeitungskritischen Front- und Heckbereiche der Rohkarosserie erreichen.

In weiterer Ausbildung der Erfindung ist vorgesehen, daß sich an ein oder mehrere Arbeitsstationen ein- oder beidseitig Teilefertigungsbereiche anschließen, in denen Karosserieteilteile als Baugruppen oder Einzelteile hergestellt und den angeschlossenen Arbeitsstationen übergeben werden. Dies ermöglicht eine besonders komplexe Fertigungsanlage, die auch höchsten Anforderungen an Präzision und Flexibilität in der Fertigungstechnik gerecht wird. Im Interesse einer hohen Flexibilität werden die bereitgestellten Karosserieteilteile über Spannrahmen mit Zuführrobotern zugeführt, die zugleich eine exakte Positionierung und Spannung dieser Karosserieteilteile innerhalb der Arbeitsstation ermöglichen.

Die Spannrahmen können zur Neubestückung in die Teilefertigungsbereiche zurückgeführt werden. Alternativ können sie aber auch am Karosserieteil verbleiben und mit diesem in die nächste und eventuell weitere Arbeitsstationen transportiert werden. Die Spannrahmen können dabei außerdem als Transportwerkzeug benutzt werden.

In der bevorzugten Ausführungsform sind alle Arbeitsstationen und vorzugsweise auch alle Teilefertigungsbereiche komplett mit Robotern ausgerüstet, die sämtliche Transport- und Handhabungsaufgaben mit den Karosserieteilen durchführen.

Die erfindungsgemäße Fertigungstechnik ist für hochkomplexe Rohkarosserien von Fahrzeugen vorgesehen und geeignet. Entlang der Transferlinie wird dabei vorzugsweise die Bodengruppe transportiert und nach und nach in sich aufgerüstet sowie mit den zusätzlichen Karosserieteilen und Baugruppen, wie Seitenwänden, Dach etc. ergänzt und zu einer komplettierten Rohkarosserie geheftet und fertig geschweißt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf eine Fertigungsanlage mit mehreren Arbeitsstationen und Teilefertigungsbereich im Ausschnitt,
- Figur 2:: eine perspektivische Darstellung der Fertigungsanlage von Figur 1,
- Figur 3:: eine vergrößerte Ausschnittsdarstellung von 2 Arbeitsstationen in perspektivischer Darstellung,
- Figur 4:: eine perspektivische Ansicht der Anordnung von Figur 3 aus einem anderen Blickwinkel,
- Figur 5:: eine Stirnansicht einer Arbeitsstation entlang der Transferlinie beim Arbeitstakt,
- Figur 6:: eine Variante zu Figur 5 in der Darstellung beim Fördertakt und
- Figur 7:: eine Variante zu Figur 1 bis 6 mit einem einzelnen unterhalb der Transferlinie angeordneten Transferroboter.

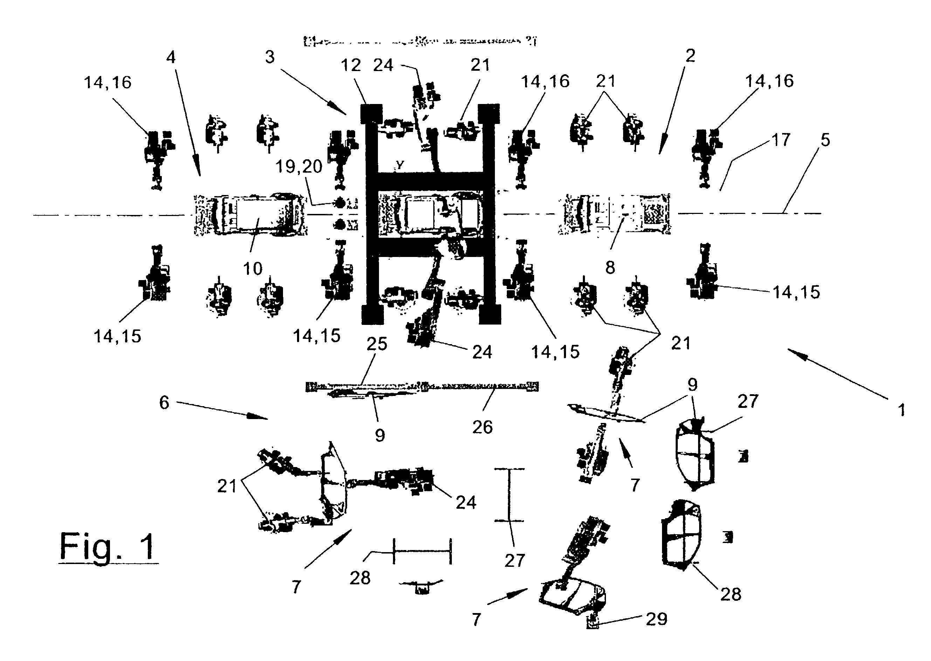

Figur 1 zeigt in der Draufsicht und in einem Ausschnitt eine Transferanlage (1), die aus mehreren Arbeitsstationen (2,3,4) und ggf. aus ein oder mehreren Teilefertigungsbereich (6) besteht. Die Transferanlage (1) ist als Aufbaulinie für Rohkarosserien von Fahrzeugen ausgebildet, wobei in den Arbeitsstationen (2,3,4) die Rohkarosserie nach und nach durch Zuführen, Fügen und Bearbeiten von Karosserieteilen aufgebaut wird. Hierbei wird z.B. in die erste Arbeitsstation (2) eine Bodengruppe (8) zugeführt, die in den folgenden Arbeitsstationen (3,4) mit Seitenwänden (9), Dach (10) und weiteren Karosserieteilen ergänzt wird. Der Übersicht halber sind nur einige Arbeitsstationen und nur ein Teilefertigungsbereich dargestellt.

Die Arbeitsstationen (2,3,4) sind entlang einer Transferlinie (5) angeordnet, die sich als gedankliche und richtungsmäßig zu verfolgende Verbindungslinie mitten durch die Stationen (2,3,4) erstreckt. Die Transferlinie (5) ist in der gezeigten Ausführungsform gerade. Sie kann aber auch eine abweichende Form haben und z.B. in einem Bogen gekrümmt, über Eck geführt oder in beliebig anderer Weise geformt sein.

Die Arbeitsstationen (2,3,4) sind entlang der Transferlinie (5) hintereinander mit gegenseitigem Abstand aufgereiht. Im Zwischenraum oder Freiraum zwischen den Arbeitsstationen (2,3,4) befinden sich jeweils roboterunterstützte Transporteinheiten (14), die die Bodengruppen (8) und die sich aufbauende Rohkarosserie von Station zu Station transportieren und dabei vorzugsweise in einer Schwenkbewegung überheben.

Die Bodengruppe (8) und die sich aufbauenden Rohkarosserien sind hochkomplexe Bauteile, die zudem eine erhebliche Größe und ein hohes Gewicht aufweisen können und entsprechend unhandlich sind. Die Rohkarosserien werden mit einer Bodengruppe (8) beginnend entlang der Transferlinie (5) nach und nach aufgebaut, bearbeitet und fertig gestellt.

Hierbei werden aus ein oder mehreren ein- oder beidseits der Transferlinie (5) an die Arbeitsstationen (2,3,4) angeschlossenen Teilefertigungsbereichen (6) Karosserieteile, z.B. Karosseriebaugruppen zugeführt und angebaut. Im gezeigten Ausführungsbeispiel werden Seitenwände (9) und das Dach (10) gefertigt und/oder zugeführt. Die Dachfertigung kann z.B. extern an einer anderen Stelle geschehen. Die Karosserieteile (8,9,10) sind der Übersichtlichkeit wegen teilweise schematisch angedeutet und nur in Umrissen dargestellt.

In den Arbeitsstationen (2,3,4) werden ein oder mehrere unterschiedliche und komplexe Bearbeitungsvorgänge an den Karosserieteilen (8,9,10) durchgeführt. In dem gezeigtem Anlagenausschnitt wird z.B. in der Arbeitsstation (2) in einer Vorfertigung die Bodengruppe (8) von ein oder mehreren ein- oder beidseits angeordneten Bearbeitungsrobotern (21) geschweißt oder auf andere Weise bearbeitet. Hierbei können auch Einzelteile zugeführt und montiert werden. In der nächsten Arbeitsstation (3), einer sogenannten Framing-Station, kommen die beiden Seitenwände (9) und das Dach (10) hinzu und werden durch Schweißen geheftet. Die so vorstabilisierte Rohkarosserie wird in der folgenden Arbeitsstation (4) in einem ersten Arbeitsgang ausgeschweißt. Hieran können sich weitere Stationen, z.B. eine Decking-Station etc. anschließen. Eingangseitig können vor der Arbeitsstation (2) mit der Vorfertigung weitere Rüst-, Montage- oder sonstige Bearbeitungsstationen angeordnet sein.

Die roboterunterstützten Transporteinheiten (14) sind im Zwischenraum zwischen den Arbeitsstationen (2,3,4) angeordnet. Der Transport erfolgt vorzugsweise in einer Überhebe- und Schwenkbewegung. Innerhalb der Arbeitsstationen (2,3,4) sind die Bodengruppen (8) auf geeigneten Werkstückaufnahmen (11) mit Positionierelementen, z.B. Steckdornen oder dergleichen gehalten. Die Bodengruppen (8) können dabei selbstragend sein oder auf Traggerüsten, z.B. Paletten, angeordnet sein. Auf den Werkstückaufnahmen (11) werden dann die Bodengruppen (8) direkt oder über die Paletten exakt positioniert.

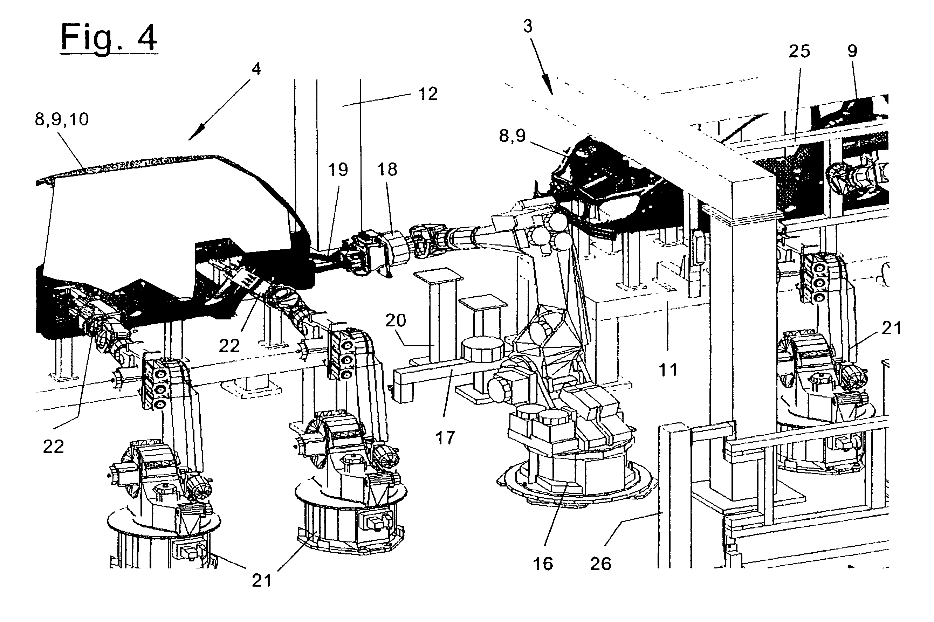

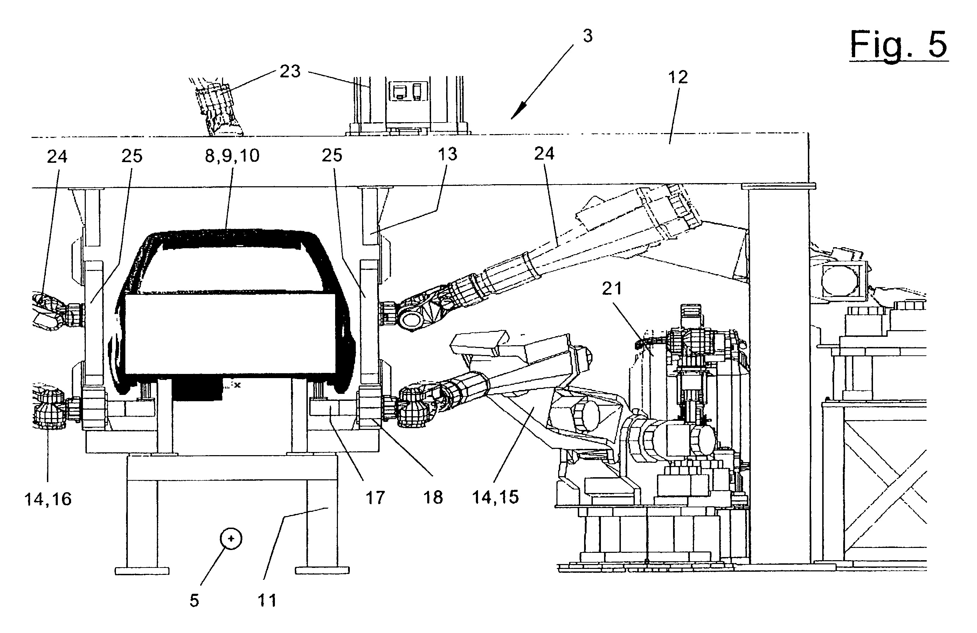

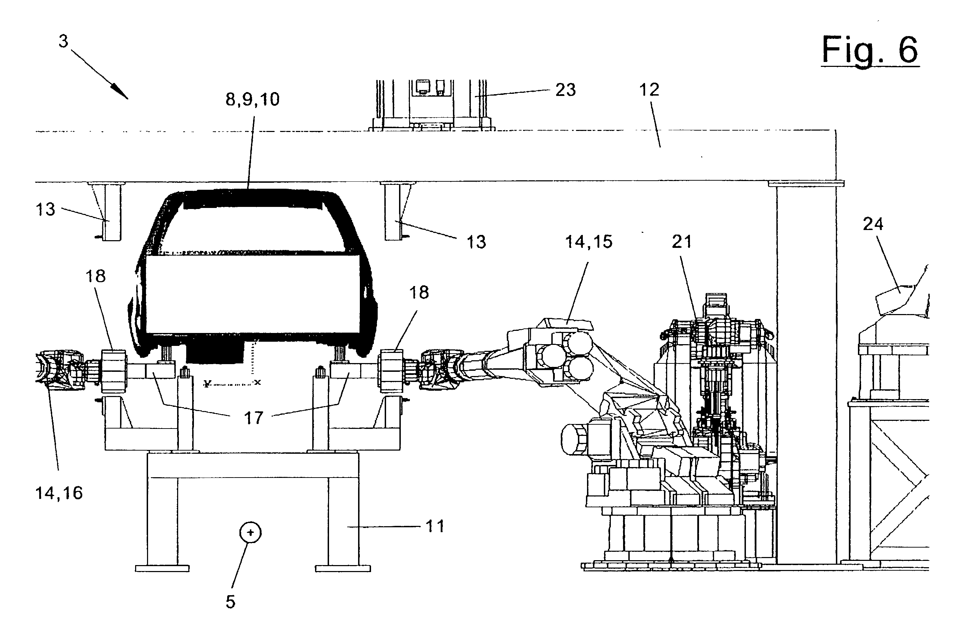

In der Ausführungsform von Figur 1 bis 6 bestehen die Transporteinheiten (14) aus jeweils zwei neben und beidseits der Transferlinie (5) im Zwischenraum angeordneten Transferrobotern (15,16), die mit geeigneten Transportwerkzeugen (17) ausgerüstet sind. Die Transferroboter (15,16) sind in ihren Bewegungen und Funktionen beim Bodengruppentransport aufeinander abgestimmt und vorzugsweise mit einer gemeinsamen Steuerung (nicht dargestellt) verbunden. Bei der gezeigten geraden Transferlinie (5) bewegen sich die paarweisen Transferroboter (15,16) synchron.

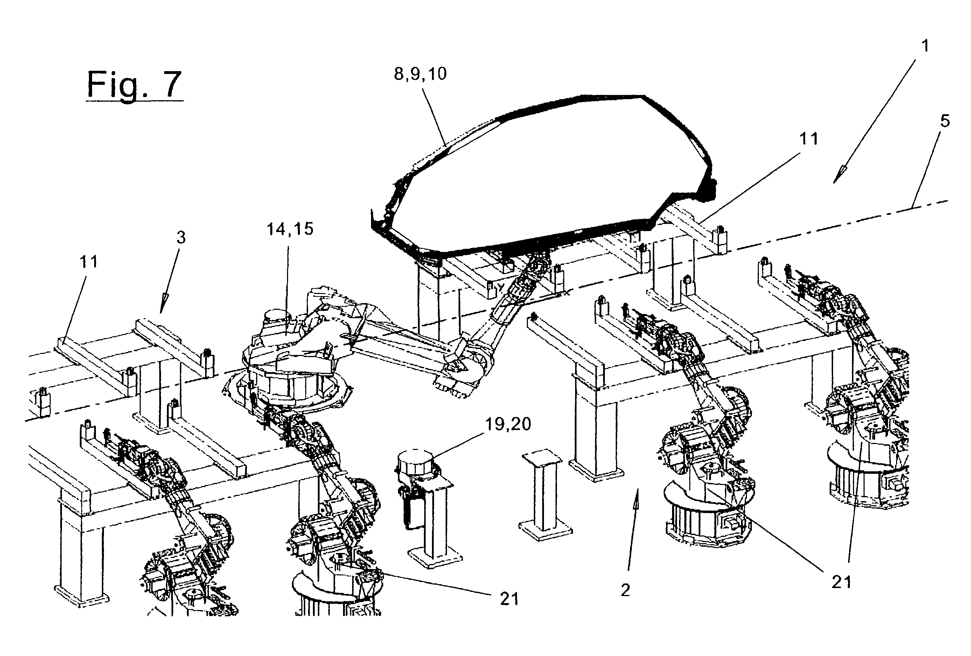

In Abwandlung der gezeigten Ausführungsform können auch mehr als zwei Transferroboter (15,16) zwischen den Arbeitsstationen (2,3,4) angeordnet sein, wobei gegebenenfalls eine Zwischenübergabe und eventuell auch eine Zwischenpositionierung der Bodengruppen (8) auf Ablagen stattfindet. Dies kann z.B. bei gekrümmten Transferlinien (5) der Fall sein. Figur 7 zeigt eine weitere Variante, die mit einem einzelnen Transferroboter (5) auskommt.

Das Transportwerkzeug (17) besteht beispielsweise aus einem von der Roboterhand horizontal gehaltenen Tragbalken mit hochstehenden Stütz- und Positionierstiften, mit denen die Bodengruppe (8) im Randbereich an der Unterseite an vorbereiteten Stellen untergriffen, angehoben, in die Nachbarstation gebracht und dort wieder abgesetzt wird.

Entlang der Transferlinie (5) kann der Förder- und Arbeitstakt der Arbeitsstationen (2,3,4) variieren. Hierbei könne gegebenenfalls auch Stau- oder Wartepositionen oder Verzweigungen bzw. Parallelanordnungen von Arbeitsstationen vorgesehen sein. In der gezeigten Anordnung ist der Arbeits- und Fördertakt in den Arbeitsstationen (2,3,4) gleich.

Variieren können gegebenenfalls auch die Abstände zwischen den Arbeitsstationen (2,3,4). Außerdem können die Werkstückaufnahmen (11) in den Stationen eine unterschiedliche Form haben. Zum Beispiel können sie Schräglagen, Drehstellungen oder sonstige unterschiedliche Positioniermöglichkeiten für die Bodengruppe (8) haben. Mit diesen variablen Positioniermöglichkeiten lassen sich z.B. die Zugangsmöglichkeiten zur Bodengruppe (8) optimieren. Die Werkstückaufnahmen (11) können außerdem in sich beweglich sein und während des Arbeitstaktes die Positionen für eine weitere Optimierung der Erreichbarkeit ändern.

Die Transferroboter (14,15) können außer dem Bodengruppentransport auch Zusatzaufgaben übernehmen. Zu diesem Zweck sind die Roboterhände mit Wechselkupplungen (18) ausgestattet, die einen Werkzeugtausch erlauben. Im Arbeitsbereich, vorzugsweise im Zwischenraum zwischen den Arbeitsstationen (2,3,4) sind dann ein oder mehrere Magazine (20) für Wechselwerkzeuge (19), z.B. Schweißwerkzeuge, angeordnet. Figur 1 verdeutlicht dies an der Schnittestelle zwischen den Arbeitsstationen (3,4). Die Transferroboter (15,16) können dann während des Arbeitstaktes der Station die Heck- und/oder Frontpartie des Bodengruppen (8) oder der sich aufbauenden Rohkarosserie bearbeiten. Hierbei ist es außerdem möglich, daß die Roboter (15,16) in beiden benachbarten Arbeitsstationen (3,4) arbeiten.

In der bevorzugten Ausführungsform der Fertigungsanlage (1) werden sämtliche Transport- und Handhabungsaufgaben von Robotern übernommen. Außerdem werden vorzugsweise auch alle Bearbeitungsvorgänge von Robotern durchgeführt. Hierzu sind in den einzelnen Arbeitsstationen (2,3) sowohl ein oder mehrere Bearbeitungsroboter (21) angeordnet. Außerdem können Zuführroboter (24) vorhanden sein, die extern hergestellte Karosserieteilteile (9,10), die z.B. aus einem angeschlossenen Teilefertigungsbereich (6) stammen, an die Arbeitsstationen (2,3,4) zuführen.

Im gezeigten Ausführungsbeispiel ist die Heftstation (3) als sogenannte Framing-Station ausgebildet. Sie besitzt eine Stationsrahmen (12), der portalartig ausgebildet ist. Auf dem Portal (12) können ein oder mehrere Portalroboter (23) angeordnet sein, die z.B. in der Heftstation das Dach (10) zuführen. Beidseits der Transferlinie (5) sind am Stationsrand Zuführroboter (24) angeordnet, die ebenfalls Karosserieteilteile (9), hier z.B. die Seitenwände, an die Bodengruppe (8) zuführen und positionieren. Mit Bearbeitungsrobotern (21) werden die Heftschweißungen gesetzt.

Die Karosserieteile (9,10) stammen aus ein oder mehreren ein- oder beidseits der Transferlinie (5) angeordneten Teilefertigungsbereichen (6). Im gezeigten Ausführungsbeispiel sind an die Heftstation (3) beidseits zwei Teilefertigungsbereiche (6) für die Seitenwände (9) angeschlossen. Der Übersicht halber ist nur ein solcher Bereich dargestellt.

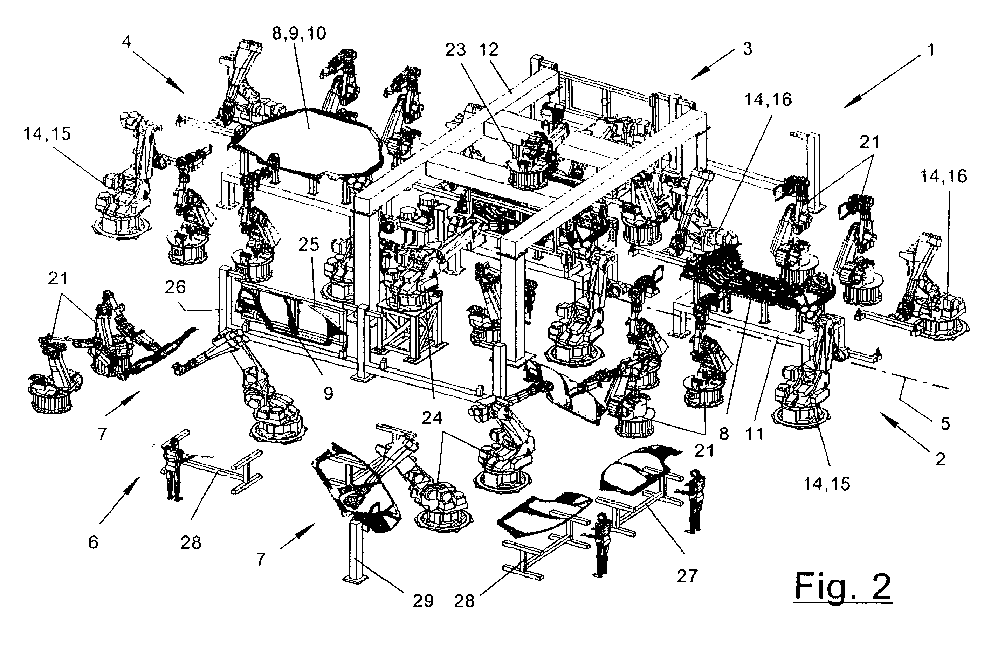

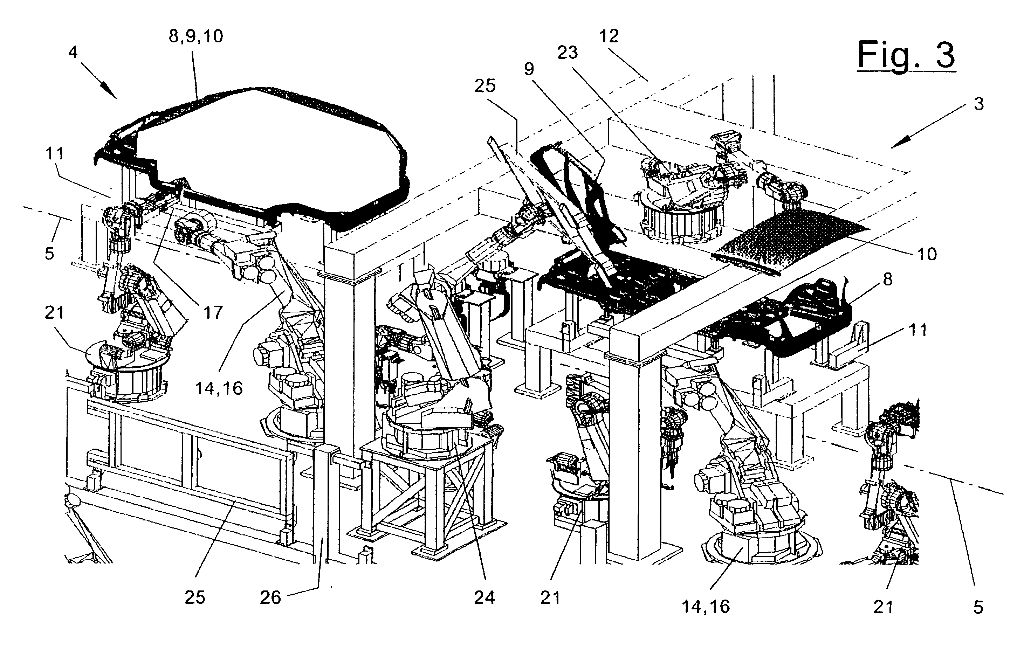

Die Seitenwände (9) werden hierbei über Spannrahmen (25) zugeführt. Die Spannrahmen (25) sind in ein oder mehreren Rahmenaufnahmen (26) lösbar gehalten, die sich an der Schnittstelle zwischen der Arbeitsstation (3) und dem Teilefertigungsbereich (6) befinden. An dieser Schnittstelle sind auch jeweils die Zuführroboter (24) angeordnet, die die beladenen Spannrahmen (25) aufnehmen und mitsamt der Seitenwand (9) an die Bodengruppe (8) zustellen und dort positionieren. In ähnlicher Weise können auch die Portalroboter (23) mit dem Dach (10) arbeiten. Figur 2 und 3 verdeutlichen diese Technik in zwei unterschiedlich großen perspektivischen Ausschnitten.

Die Spannrahmen (25) werden in der Arbeitsstation (3) über geeignete stationäre Positioniervorrichtungen (13) am Stationsrahmen positioniert. Die Spannrahmen (25) können sich dabei auch aneinander abstützen und gegenseitig verbunden sein, wobei sie ein käfigartiges Spannrahmengehäuse bilden. Die Seitenwände (9) und gegebenenfalls das Dach (10) erhalten dadurch ihre exakte Position gegenüber der Bodengruppe (8) und werden in dieser Stellung durch geeignete Werkzeuge an den Bearbeitungsrobotern (21) und/oder den Spannrahmen (25) gespannt. Nach dem Heften werden die Spannrahmen (25) von den Karosserieteilteilen (9,10) gelöst und von den Zuführrobotern (24) leer an die Rahmenaufnahmen (26) übergeben, wo sie erneut aus dem Teilefertigungsbereich (6) bestückt werden können.

Der Teilefertigungsbereich (6) arbeitet vorzugsweise im gleichen Takt wie die eng benachbarte Arbeitsstation (3). In der in Figur 1 beispielsweise dargestellten Ausführungsform wird die Seitenwand (9) nach und nach aus Einzelteilen aufgebaut. Hierfür sind mehrere Ablagen (27,28) für die einzelnen Teile vorgesehen. In ein oder mehreren Arbeitsstellen (7), die vorzugsweise allesamt mit Robotern (21,24) bestückt sind, werden die verschiedenen Arbeitsvorgänge bei der Teilefertigung durchgeführt. Hierbei finden vorzugsweise alle Handhabungs- und Transportvorgänge mit Robotern statt, wobei die Roboter einander die Teile zur Bearbeitung hinhalten oder ein Teil auch an einem stationären Arbeitsgerät (29) zur Bearbeitung halten. Die fertige Seitenwand (9) wird dann von einem Zuführroboter (24) an einen bereitstehenden leeren Spannrahmen (25) übergeben, positioniert und gespannt. Sie steht dann für die Weiterverarbeitung in der Heftstation (3) bereit.

Figur 7 zeigt eine Variante zu Figur 1 bis 6. Hier besteht die Transporteinheit (14) aus einem einzelnen Transferroboter (15), der zwischen den Arbeitsstationen (2,3) angeordnet ist und sich dabei unterhalb der Transferlinie (5) befindet. Die Transferlinie (5) verläuft in Höhe der Karosserieteile (8,9,10) bzw. der Werkstückaufnahmen (11) in den Arbeitstationen (2,3,4). Der Transferroboter (15) ist z.B. in einer Vertiefung des Hallenbodens versenkt angeordnet. Alternativ können die Werkstückaufnahmen (11) auch mit entsprechendem Abstand über dem Anlagenboden angeordnet sein.

Der einzelne Transferroboter (15) greift mit seinem Transportwerkzeug die Bodengruppe (8) von unten und hebt sie z.B. in einer Überkopfbewegung von der einen Arbeitsstation (2) in die benachbarte Arbeitsstation (3). Der Transferroboter (15) ist vorzugsweise mittig zur Transferlinie (5) angeordnet. Er kann aber auch seitlich versetzt stehen. Alternativ kann der Transferroboter (15) auch hängend an einem Portal oder dergleichen angeordnet sein und die Bodengruppe (8) mit einem entsprechend anders ausgebildeten und geeigneten Transportwerkzeug von oben her greifen und überheben.

Bei der gezeigten Variante von Figur 7 sind die Werkstückaufnahmen (11) entsprechend angepaßt. Sie lassen in der Mitte einen Freiraum offen, durch den der Transferroboter (15) greifen und unter die Bodengruppe (8) gelangen kann. Dieser Freiraum wird auch für die kollisionsfreie Überhebebewegung benötigt.

Der Transferroboter (15) hat ansonsten die gleiche oder ähnliche Ausbildung und Funktion wie in den vorbeschriebenen Ausführungsbeispielen. Durch seinen tiefe Anordnung ist er auch in der Lage, größere Bereiche an der Unterseite der Bodengruppen (8) für Bearbeitungsvorgänge zu erreichen.

Abwandlungen der gezeigten Ausführungsform sind in verschiedener Weise möglich. So kann die Zahl der Arbeitsstationen (2,3,4) und gegebenenfalls der Teilefertigungsbereich (6) sowie deren gegenseitige Zuordnung beliebig variieren. Die Teilefertigungsbereiche (6) können insbesondere von den Arbeitsstationen weiter entfernt sein, wobei sich im Stationsbereich Magazine für Werkstücke bzw. beladene Spannrahmen befinden. Außerdem kann die Fertigungsanlage (1) mehrere Einzelabschnitte mit Transferlinien (5) enthalten. Die Rohkarosserien (8,9,10) können auch aus anderen Komponenten bestehen.

In einer weiteren Abwandlung ist es möglich, die Spannrahmen (25) nicht in die Teilefertigungsbereiche (6) für eine Neubestückung zurückzuführen, sondern an den Karosserieteilen (8,9,10) zu belassen und mit in die nächste und eventuell weitere Arbeitsstationen (3,4) zu transportieren. In diesem Fall ist es günstig, die Spannrahmen (25) untereinander zu einem stabilen Rahmengerüst oder einem Käfig zu verbinden. Insbesondere werden die seitlichen Spannrahmen (25) mit dem Traggerüst oder einer Palette für die Karosserieteile verbunden. Der so gebildete Käfig kann die Karosserieteile an allen vier Seiten geschlossen umgeben. Er kann aber auch einseitig offen und nur entsprechend ausgesteift sein.

Bei dieser Variante ist es zudem möglich, die Spannrahmen (25) als Transportwerkzeuge (17) auszubilden und einzusetzen. Zu diesem Zweck empfiehlt es sich, die Spannrahmen (25) mit geeigneten Wechselkupplungen zu versehen und gegebenenfalls solche Wechselkupplungen mehrfach und zusätzlich anzuordnen. Die als Transportwerkzeug dienenden Spannrahmen (25) können dadurch von den Transferrobotern (15,16) übernommen und zu Transportzwecken gehandhabt werden. Die Spannrahmen (25) können dazu in der jeweiligen Arbeitsstation (3,4) von den Zuführrobotern (24) gelöst und an die Transferroboter (15,16) übergeben werden. Alternativ ist es auch möglich, die Spannrahmen (25) in der Arbeitsstation (3,4) auf geeignete Weise lösbar zu fixieren. Dadurch können die Zuführroboter (24) die Spannrahmen (25) frühzeitig freigeben, wobei sie über die stationären Fixierungen bis zur Übernahme durch die Transferroboter (15,16) gehalten werden.

In einer weiteren Ausgestaltung ist es bei einer entsprechend leichtgewichtigen Konstruktion der Spannrahmen (25) möglich, in diesen Spannrahmen Greif- und Spannfunktionen miteinander zu vereinen. Die Spannrahmen (25) können dann nicht nur an den Rahmenaufnahmen (26) gehalten werden, sondern als Tragelement in den Teilefertigungsbereichen (6) zirkulieren. Geeignete leichtgewichtige und relativ schwache Greifer ermöglichen eine Bestückung mit Einzelteilen und deren Bearbeitung im Teilefertigungsbereich (6). Der auf diese Weise z.B. nach und nach mit einer Baugruppe (9,10) versehene Spannrahmen (25) wird dann direkt oder unter Zwischenlagerung in einer Rahmenaufnahme (26) an den Zuführroboter (24) übergeben. In der Arbeitsstation (3,4) führt der Spannrahmen dann außer Greif- und Haltefunktionen auch Spannfunktionen aus, indem er zusammengehörige Werkzeugteile faßt und gegeneinander spannt sowie in Position bringt. Dabei muß der Spannrahmen (25) auch die gegebenenfalls aus Toleranzen oder einem Verzug der Karosserieteile erforderlichen Verformungskräfte aufbringen, um die Karosserieteil in die für den Bearbeitungsprozeß erforderliche Lage oder Form zu bringen. Auch in diesem Fall ist der Spannrahmen (25) in geeigneter Weise mit ein- oder mehreren Wechselkupplungen versehen, die eine Handhabung durch Roboter (15,16,21,23,24) und gegebenenfalls eine Übergabe zwischen den Robotern erlauben.

Beim Einsatz als Transportwerkzeug (17) werden die Spannrahmen (25) nach Beendigung ihrer Aufgabe von den Karosserieteilen (8,9,10) gelöst und vorzugsweise im Kreislauf wieder an die Ausgangs-Arbeitsstation (3,4) zurückgeführt. Gegebenenfalls kann auch eine Rückführung in den dort angeschlossenen Teilefertigungsbereich (6) für eine Neubestückung mit Karosserieteilen erfolgen.

### BEZUGSZEICHENLISTE

- 1: Transferanlage, Fertigungsanlage
- 2: Arbeitsstation, Vorfertigen
- 3: Arbeitsstation, Heften
- 4: Arbeitsstation, Ausschweißen
- 5: Transferlinie
- 6: Teilefertigungsbereich
- 7: Arbeitsstelle
- 8: Bodengruppe, Karosserieteil
- 9: Seitenwand, Karosserieteil
- 10: Dach, Karosserieteil
- 11: Werkstückaufnahme
- 12: Stationsrahmen, Portal
- 13: Positioniervorrichtung
- 14: Transporteinheit
- 15: Roboter, Transferroboter
- 16: Roboter, Transferroboter
- 17: Transportwerkzeug
- 18: Wechselkupplung
- 19: Werkzeug, Schweißwerkzeug
- 20: Magazin
- 21: Bearbeitungsroboter
- 22: Bearbeitungswerkzeug
- 23: Portalroboter
- 24: Zuführroboter
- 25: Spannrahmen
- 26: Rahmenaufnahme
- 27: Ablage
- 28: Ablage
- 29: Arbeitsgerät

## Patentansprüche

1. Verfahren zum Fertigen von Rohkarosserien von Fahrzeugen in einer Transferanlage (1) mit mehreren hintereinander entlang einer Transferlinie (5) angeordneten Arbeitsstationen (2,3,4), wobei die Rohkarosserien jeweils nach und nach aus einer Bodengruppe (8) und mehreren nacheinander in den Arbeitstationen (2,3,4) zugeführten und an die Bodengruppe (8) gefügten Baugruppen (9,10) und Einzelteilen aufgebaut und bearbeitet werden und wobei die Bodengruppen (8) und die sich aufbauenden Rohkarosserien von einer Transporteinrichtung taktweise durch die einzelnen Arbeitstationen (2,3,4) der Transferanlage (1) transportiert werden, dadurch **gekennzeichnet**, daß die Bodengruppen (8) und die sich aufbauenden Rohkarosserien mit zwischen den Arbeitsstationen (2,3,4) angeordneten roboterunterstützten Transporteinheiten (14) durch die Transferanlage (1) transportiert werden.

2. Verfahren nach Anspruch 1, dadurch **gekennzeichnet**, daß die Bodengruppen (8) und die sich aufbauenden Rohkarosserien von jeweils mindestens einem neben, unter oder über der Transferlinie (5) angeordneten Transferroboter (15,16) von einer Arbeitsstation (2,3) in die benachbarte Arbeitsstation (3,4) transportiert und dort positioniert werden.

3. Verfahren nach Anspruch 1 oder 2, dadurch **gekennzeichnet**, daß die Bodengruppen (8) und die sich aufbauenden Rohkarosserien von jeweils zwei oder mehr beidseits neben der Transferlinie (5) angeordneten Transferrobotern (15,16) in einer abgestimmten Bewegung von einer Arbeitsstation (2,3) in die benachbarte Arbeitsstation (3,4) gehoben und dort positioniert werden.

4. Verfahren nach einem der Ansprüche 1 bis 3, dadurch **gekennzeichnet**, daß die Transporteinheiten (14) nach dem Transport das Transportwerkzeug mit einem anderen Werkzeug wechseln und andere Bearbeitungsvorgänge an den Bodengruppen (8) und den sich aufbauenden Rohkarosserien durchführen.

5. Verfahren nach einem der Ansprüche 1 bis 4, dadurch **gekennzeichnet**, daß den Bodengruppen (8) in den Arbeitsstationen (2,3,4) Einzelteile und/oder Baugruppen (9,10) an Spannrahmen (25) mit ein oder mehreren Zuführrobotern (24) von ein- oder beidseits an den Arbeitsstationen (2,3,4) angeschlossenen Teilefertigungsbereichen (6) zugeführt, positioniert und gespannt sowie gegebenenfalls mit anderen Robotern (21) bearbeitet werden.

6. Verfahren nach einem der Ansprüche 1 bis 5, dadurch **gekennzeichnet**, daß die Spannrahmen (25) am Werkstück (8,9,10) verbleiben und als Transportwerkzeuge (17) eingesetzt werden.

7. Vorrichtung zum Fertigen von Rohkarosserien von Fahrzeugen, bestehend aus einer Transferanlage (1) mit mehreren entlang einer Transferlinie (5) hintereinander angeordneten und mit Robotern (21,22,23,24) ausgerüsteten Arbeitsstationen (2,3,4), in denen die Rohkarosserien jeweils nach und nach aus einer Bodengruppe (8) und mehreren nacheinander zugeführten und an die Bodengruppe (8) gefügten Baugruppen (9,10) und Einzelteilen aufgebaut und bearbeitet werden, wobei eine taktweise arbeitende Transporteinrichtung für den Transport der Bodengruppen (8) und der sich aufbauenden Rohkarosserien durch die einzelnen Arbeitsstationen (2,3,4) der Transferanlage (1) vorgesehen ist, dadurch **gekennzeichnet**, daß die Transporteinrichtung aus mehreren zwischen den Arbeitsstationen (2,3,4) angeordneten roboterunterstützten Transporteinheiten (14) besteht.

8. Vorrichtung nach Anspruch 7, dadurch **gekennzeichnet**, daß die Transporteinheit (14) mindestens einen neben, unter oder über der Transferlinie (5) angeordneten Transferroboter (15,16) mit einem Transportwerkzeug (17) aufweist.

9. Vorrichtung nach Anspruch 7 oder 8, dadurch **gekennzeichnet**, daß die Transporteinheit (14) zwei oder mehr beidseits der Transferlinie (5) angeordnete Transferroboter (15,16) aufweist, deren Bewegungen so aufeinander abgestimmt sind, daß sie gemeinsam die Bodengruppe (8) und die sich aufbauenden Rohkarosserie transportieren und positionieren.

10. Vorrichtung nach einem der Ansprüche 7 bis 9, dadurch **gekennzeichnet**, daß die Transferroboter (15,16) Wechselkupplungen (18) und austauschbare Werkzeuge (19), insbesondere Transportwerkzeuge (17) und Schweißwerkzeuge (19), aufweisen.

11. Vorrichtung nach einem der Ansprüche 7 bis 10, dadurch **gekennzeichnet**, daß an ein oder mehreren Arbeitsstationen (2,3,4) ein oder mehrere Zuführroboter (24) für Einzelteile und/oder Baugruppen (9,10) angeordnet und ein- oder beidseits ein oder mehrere Teilefertigungsbereiche (6) angeschlossen sind, wobei ein oder mehrere Spannrahmen (25) für die Einzelteile und/oder Baugruppen (9,10) vorgesehen sind.

12. Vorrichtung nach einem der Ansprüche 7 bis 11, dadurch **gekennzeichnet**, daß die Spannrahmen (25) als Transportwerkzeuge (17) ausgebildet sind.

13. Vorrichtung nach einem der Ansprüche 7 bis 12, dadurch **gekennzeichnet**, daß die Spannrahmen (25) ein oder mehrere Wechselkupplungen (18) aufweisen.

## Claims

1. Process for the manufacture of vehicle bodyshells in a transfer system (1) with a plurality of workstations (2, 3, 4) arranged in series along a transfer line (5), the bodyshells each being constructed progressively from a floor assembly (8) and a plurality of subassemblies (9, 10) and individual components fed successively into the workstations (2, 3, 4) and joined to the floor assembly (8), and being processed, and the floor assemblies (8) and the bodyshells that are being constructed being transported in phases through the individual workstations (2, 3, 4) of the transfer system (1) by a transport device, characterized in that the floor assemblies (8) and the bodyshells that are being constructed are transported through the transfer system (1) by robot-assisted transport units (14) arranged between the workstations (2, 3, 4).

2. Process according to Claim 1, characterized in that the floor assemblies (8) and the bodyshells that are being constructed are transported from one workstation (2, 3) into the adjacent workstation (3, 4) and positioned there by in each case at least one transfer robot (15, 16) arranged next to, below or above the transfer line (5).

3. Process according to Claim 1 or 2, characterized in that the floor assemblies (8) and the bodyshells that are being constructed are lifted from one workstation (2, 3) into the adjacent workstation (3, 4) and positioned there in a co-ordinated movement by in each case two or more transfer robots (15, 16) arranged next to the transfer line (5) on both sides.

4. Process according to one of Claims 1 to 3, characterized in that, after transport, the transport units (14) change the transport tool for another tool and perform other processing operations on the floor assemblies (8) and the bodyshells that are being constructed.

5. Process according to one of Claims 1 to 4, characterized in that individual components and/or subassemblies (9, 10) are fed to the floor assemblies (8) in the workstations (2, 3, 4) on clamping frames (25) by one or more feed robots (24) from component manufacturing zones (6) connected to the workstations (2, 3, 4) on one or both sides and are positioned and clamped and, if appropriate, are processed by other robots (21).

6. Process according to one of Claims 1 to 5, characterized in that the clamping frames (25) remain on the workpiece (8, 9, 10) and are used as transport tools (17).

7. Apparatus for the manufacture of vehicle bodyshells, comprising a transfer system (1) with a plurality of workstations (2, 3, 4), which are arranged in series along a transfer line (5), are equipped with robots (21, 22, 23, 24), and in which the bodyshells are each constructed progressively from a floor assembly (8) and a plurality of subassemblies (9, 10) and individual components successively fed in and joined to the floor assembly (8) and are processed, a transport device that operates in phases being provided for transporting the floor assemblies (8) and the bodyshells that are being constructed through the individual workstations (2, 3, 4) of the transfer system (1), characterized in that the transport device comprises a plurality of robot-assisted transport units (14) arranged between the workstations (2, 3, 4).

8. Apparatus according to Claim 7, characterized in that the transport unit (14) has at least one transfer robot (15, 16) arranged next to, below or above the transfer line (5) and having a transport tool (17).

9. Apparatus according to Claim 7 or 8, characterized in that the transport unit (14) has two or more transfer robots (15, 16), which are arranged on both sides of the transfer line (5) and the movements of which are co-ordinated with one another in such a way that together they transport and position the floor assembly (8) and the bodyshell that is being constructed.

10. Apparatus according to one of Claims 7 to 9, characterized in that the transfer robots (15, 16) have changing clutches (18) and interchangeable tools (19), in particular transport tools (17) and welding tools (19).

11. Apparatus according to one of Claims 7 to 10, characterized in that one or more feed robots (24) for individual components and/or subassemblies (9, 10) are arranged at one or more workstations (2, 3, 4) and one or more component manufacturing zones (6) are connected on one or both sides, one or more clamping frames (25) being provided for the individual components and/or subassemblies (9, 10).

12. Apparatus according to one of Claims 7 to 11, characterized in that the clamping frames (25) are designed as transport tools (17).

13. Apparatus according to one of Claims 7 to 12, characterized in that the clamping frames (25) have one or more changing clutches (18).

## Revendications

1. Procédé de fabrication de carrosseries brutes de véhicules dans une installation (1) de transfert comportant plusieurs postes (2, 3, 4) de travail disposés les uns à la suite des autres le long d'une ligne (5) de transfert, les carrosseries brutes étant chacune progressivement construites et usinées à partir d'un dessous (8) de caisse et de plusieurs sous-groupes (9, 10) et pièces détachées successivement apportés aux postes (2, 3, 4) de travail et assemblés au dessous (8) de caisse, les dessous (8) de caisse et les carrosseries brutes en construction étant transportés de façon cadencée par un système de transport dans les différents postes (2, 3, 4) de travail de l'installation (1) de transfert, caractérisé en ce que les dessous (8) de caisse et les carrosseries brutes en construction sont transportées dans l'installation (1) de transfert par des unités (14) de transport assistées par robots qui sont disposées entre les postes (2, 3, 4) de travail.

2. Procédé suivant la revendication 1, caractérisé en ce que les dessous (8) de caisse et les carrosseries brutes en construction sont chaque fois transportés d'un poste (2, 3) de travail dans le poste (3, 4) de travail voisin, et positionnés dans ce dernier poste, par au moins un robot (15, 16) de transfert disposé à côté, en dessous ou au-dessus de la ligne (5) de transfert.

3. Procédé suivant la revendication 1 ou 2, caractérisé en ce que les dessous (8) de caisse et les carrosseries brutes en construction sont chaque fois, en un mouvement adapté, soulevés d'un poste (2, 3) de travail dans le poste (3, 4) de travail voisin, et positionnés dans ce dernier poste, par deux ou plus de deux robots (15, 16) de transfert disposés de part et d'autre de la ligne (5) de transfert.

4. Procédé suivant l'une des revendications 1 à 3, caractérisé en ce qu'à la suite du transport, les unités (14) de transport remplacent leur outil de transport par un autre outil, et accomplissent d'autres opérations d'usinage sur les dessous (8) de caisse et les carrosseries brutes en construction.

5. Procédé suivant l'une des revendications 1 à 4, caractérisé en ce que, aux postes (2, 3, 4) de travail, des pièces détachées et/ou des sous-groupes (9, 10) sont apportés aux dessous (8) de caisse sur des cadres (25) de serrage par un ou plusieurs robots (24) d'alimentation, en provenance de zones (6) de fabrication d'éléments qui sont raccordées d'un côté ou des deux côtés aux postes (2, 3, 4) de travail, et y sont positionnés et serrés, et éventuellement usinés par d'autres robots (21).

6. Procédé suivant l'une des revendications 1 à 5, caractérisé en ce que les cadres (25) de serrage restent sur l'élément (8, 9, 10) usiné et sont utilisés comme outils (17) de transport.

7. Dispositif de fabrication de carrosseries brutes de véhicules, constitué d'une installation (1) de transfert comportant plusieurs postes (2, 3, 4) de travail disposés les uns à la suite des autres le long d'une ligne (5) de transfert et équipés de robots (21, 22, 23, 24), postes dans lesquels les carrosseries brutes sont chacune progressivement construites et usinées à partir d'un dessous (8) de caisse et de plusieurs sous-groupes (9, 10) et pièces détachées successivement apportés et assemblés au dessous (8) de caisse, un système de transport à fonctionnement cadencé étant prévu pour le transport des dessous (8) de caisse et les carrosseries brutes en construction dans les différents postes (2, 3, 4) de travail de l'installation (1) de transfert, caractérisé en ce que le système de transport est constitué de plusieurs unités (14) de transport assistées par robots qui sont disposées entre les postes (2, 3, 4) de travail.

8. Dispositif suivant la revendication 7, caractérisé en ce que l'unité (14) de transport comporte au moins un robot (15, 16) de transfert, disposé à côté, en dessous ou au-dessus de la ligne (5) de transfert et équipé d'un outil (17) de transport.

9. Dispositif suivant la revendication 7 ou 8, caractérisé en ce que l'unité (14) de transport comporte deux ou plus de deux robots (15, 16) de transfert disposés dé part et d'autre de la ligne (5) de transfert, robots dont les mouvements sont coordonnés de telle sorte qu'ils transportent et positionnent conjointement le dessous (8) de caisse et la carrosserie brute en construction.

10. Dispositif suivant l'une des revendications 7 à 9, caractérisé en ce que les robots (15, 16) de transfert comportent des accouplements (18) interchangeables et des outils (19) interchangeables, notamment des outils (17) de transport et des outils (19) de soudage.

11. Dispositif suivant l'une des revendications 7 à 10, caractérisé en ce que, à un ou plusieurs postes (2, 3, 4) de travail, on dispose un ou plusieurs robots (24) d'alimentation en pièces détachées et/ou en sous-groupes (9, 10), et on raccorde d'un côté ou des deux côtés une ou plusieurs zones (6) de fabrication d'éléments, un ou plusieurs cadres (25) de serrage étant prévus pour les pièces détachées et/ou les sous-groupes (9, 10).

12. Dispositif suivant l'une des revendications 7 à 11, caractérisé en ce que les cadres (25) de serrage sont conçus comme outils (17) de transport.

13. Dispositif suivant l'une des revendications 7 à 12, caractérisé en ce que les cadres (25) de serrage comportent un ou plusieurs accouplements (1,8) interchangeables.
